Europäisches Patentamt

European Patent Office

Office européen des brevets

(19)

(11) Veröffentlichungsnummer: **0 134 046**
A2

## (12) EUROPÄISCHE PATENTANMELDUNG

(21) Anmeldenummer: 84200681.9

(22) Anmeldetag: 14.05.84

(51) Int. Cl.⁴: **D 05 B 19/00**, D 05 B 27/22

(30) Priorität: 17.05.83 IT 4291383

(43) Veröffentlichungstag der Anmeldung: 13.03.85
Patentblatt 85/11

(84) Benannte Vertragsstaaten: CH DE FR GB LI SE

(71) Anmelder: Bianchi, Nereo, Via Marchesi 15,
I-27100 Pavia (IT)

(72) Erfinder: Bianchi, Nereo, Via Marchesi 15, I-27100 Pavia
(IT)

(74) Vertreter: Henke, Erwin et al, Ing.Barzanò & Zanardo
Milano S.p.A. Via Borgonuovo, 10, I-20121 Milano (IT)

(54) Nähmaschine, geeignet zur Ausführung von Stickereien.

(57) Die Erfindung bezieht sich auf eine Haushaltnähmaschine, die mit einer Vorrichtung zur automatischen Ausführung von Zierstichen ausgerüstet ist. Insbesondere stellt sich die Erfindung zur Aufgabe, einen zweckmässigen Kompromiss zwischen kompliziertem Aufbau und Leistungsfähigkeit zu erreichen, der eine wesentliche Kostensenkung bei der Herstellung der Nähmaschine ermöglicht. Bekanntlich bestehen die komplizierteren Nähmaschinen für Stickereiarbeiten unter anderem aus zwei genau synchron eingestellten Vorrichtungen, die die Querstellung der Nadelstange bzw. die Stichlänge beeinflussen. Bei der hier vorgesehenen Lösung dieser Aufgabe wird die erste dieser Vorrichtungen, die die Querbewegung der Nadel beeinflusst, von einer elektronischen Logikschaltung gesteuert, in der u.a. die je nach dem Zierstichmuster verschiedenen, möglichen Stellungen der Nadel in Querrichtung in Festwertspeichern eingespeichert sind, während die zweite, die sich wiederholenden Stichlängenänderungen steuernde Vorrichtung eine mechanisch einstellbare ist.

0134046

### BESCHREIBUNG

Die erfindungsgemässe Maschine gehört zu den unzutreffend als automatisch bezeichneten Nähmaschinen. Es handelt sich um Nähmaschinen, die die automatische Ausführung von Näharbeiten mit besonderen Eigenschaften der Zweckmässigkeit oder der Schönheit erlauben. Das wird bekanntlich dadurch erreicht, dass die Nadelstange Pendelbewegungen in Querrichtung zur Nahtlinie synchron sowohl mit der senkrechten Auf- und Abwärtsbewegung der Nadelstange als auch mit den etwaigen sich wiederholenden Änderungen des Stoffbahntransportes ausführt. Bekannt sind an Nähmaschinen angebaute Nockenvorrichtungen, die den Zweck erfüllen, im Inneren der Maschine eine Mehrzahl Nähprogramme aufzunehmen und bereitzustellen. Alle diese Nockenvorrichtungen sind mit einer Reihe Nachteile behaftet. Vor allem ist die Anzahl des ausführbaren Programme wegen des grösseren Raumbedarfes der Nocken beschränkt, da ein bis zwei Nocken für jeden Zierstichmuster benötigt werden. Ein weiterer Nachteil der bisherigen Nähmaschinen liegt in der Kompliziertheit der Bereitstellung: die Näherin muss - damit die Nähmaschine das jeweils von ihr gewählte Zierstichprogramm ausführen kann - eine Reihe umständlicher, oft anstrengender, nicht gerade selbstverständlicher Handlungen in schlecht im Gedächtnis zu behaltender Reihenfolge ausführen. Ein weiterer Nachteil liegt in der mechanischen Kompliziertheit des Systems, mit dem eine besondere Geräuschbildung, Ungenauigkeit der Ausführung, frühzeitiger Verschleiss der Maschinenteile zusammenhängen, wodurch sich das Aussehen der ausgeführten Zierstiche mit der Zeit verschlechtert.

Es sind Nähmaschinen bekannt, die von einer Logik-Schaltung gesteuert werden, welche einen Mikroprozessor enthält oder

0134046

die Nähprogramme in ROM (Read Only Memory) speichert. Sie zum Beispiel die Patentanmeldung Nr. 42904 A/78. Bei diesen Maschinen ist die Anzahl der speichbaren Nähprogramme praktisch unbegrenzt. Die Einstellung des Nähprogrammes erfolgt seitens der Näherin spielendleicht durch Tastendruck ohne Verschiebung von Elementen, wie Nocken oder Stifte. Bekanntlich umfassen derartige Nähmaschinen zwei von der Logik-Schaltung gesteuerte Linearmotoren: der eine bewirkt die Querbewegung der Nadelstange, der andere regelt die Stichlänge. Diese Maschinen sind jedoch besonders teuer. Im Vergleich zu einer Nähmaschine mit mechanischer Zierstichvorrichtung wird hier eine billige, aus einer gewissen Anzahl Drehnocken, Stifte und Wählelemente bestehende Gruppe durch zwei Linearmotoren, einen Trafo und einen Gleichrichter zur Speisung der Motoren, einen elektronischen Kreis mit hochentwickelten und daher teueren Bestandteilen, Synchronisiervorrichtungen und äusserst genaue Stellungsfühler besonders zur Stichlängeneinstellung ersetzt.

Der Erfindung liegt daher die Aufgabe zugrunde, eine Nähmaschine zu schaffen, die zwar die modernen Neuerungen der Technik ausnutzt, aber einen annehmbaren Kompromiss zwischen Leistungen und Kosten darstellt. Der Fachmann weiss zum Beispiel, dass man viele Zierstiche ausführen kann, wenn man bei gleichbleibendem Transport die Nadelstange sich programmiert wiederholende Querbewegungen vornehmen lässt. Ein Beweis dafür ist die Tatsache, dass so ausgelegte Nähmaschinen, die mit einer automatischen mechanischen Vorrichtung nur zum Steuern der Querstellungen der Nadelstange handelsüblich sind.

Eine erste Vereinfachung der erfindungsgemässen Nähmaschine

0134046

ist daher die Anwendung einer elektronischen Steuerung nur für die Nadelstange. Dabei umfasst die Nähmaschine nur einen Linearmotor, einen Trafo, einen Gleichrichter und einen elektronischen Kreis kleinerer Abmessungen sowie die halbe Anzahl Stellungsfühler, die auch weniger teuer sind, da die Querbewegung der Nadelstange weniger genau als die Einstellung der Stichlänge sein darf.

Eine so gestaltete Nähmaschine führt zwar eine beträchtliche Anzahl Zierstichmuster aus, ist aber nicht in der Lage, die sogenannten elastischen Stiche durchzuführen, die sehr nützlich und von den Benutzern sehr gefragt sind. Es handelt sich um Kurztakt-Zierstiche, für die eine zyklische Transportregelung erforderlich ist. Mit einem einzigen, zweckmässig mit verschiedenen Programmen der Nadelstellung verknüpften Transportprogramm lassen sich sämtliche gewünschten elastischen Haptstiche ausführen. Es ist jedoch offensichtlich unwirtschaftlich, einen elektronischen Speicher und eine elektronische Steuerung für nur ein Programm anzuwenden. Die Nähmaschine ist daher mit einer mechanischen Vorrichtung zur automatischen Steuerung der Stichlänge versehen, die sehr einfach ist, weil sie nur einen Nocken besitzt.

Der Erfindung liegt die weitere Aufgabe zugrunde, das Handbetätigungselement der Sticheinstellung mit der Funktion zu betrauen, zwischen wenigstens zwei (besser drei) Zierstichscharen zu wählen, und zwar Engzierstiche, Kurztakt-Zierstiche mit gleichbleibendem Transport, die auch Nutzstiche genannt werden, und die elastischen Zierstiche mit automatischem Transport.

Weitere Vorteile der Erfindung gehen im einzelnen aus der nachstehenden Beschreibung hervor.

0134046

Nun wird eine besondere, nicht beschränkende Ausführungsform der Erfindung an Hand der beiliegenden Zeichnungen beschrieben. Es zeichen:

Fig. 1 die Vorderansicht einer erfindungsgemässen Nähmaschine,

Fig. 2 eine Detailansicht der Schalttafel,

Fig. 3 eine Teilschnittansicht nach der Linie 3-3 von Fig. 1,

Fig. 4 eine Teilschnittansicht nach der Linie 4-4 von Fig. 3,

Fig. 5 eine Teilschnittansicht nach der Linie 5-5 von Fig. 3,

Fig. 6, 7, 8, 9 Blockschaltbilder der verschiedenen Betriebsbedingungen der Nähmaschine,

Fig. 10, 11, 12, 13, 16, 17 einige mit der erfindungsgemässen Nähmaschine ausführbare Zierstichmuster in vergrössertem Masstab,

Fig. 14 eine Teilschnittansicht nach der Linie 14-14 von Fig. 4,

Fig. 15 eine Variante in Teilschnittansicht wie in Fig. 14, und

Fig. 18 dieselbe Variante in einer Ansicht wie diejenige von Fig. 2.

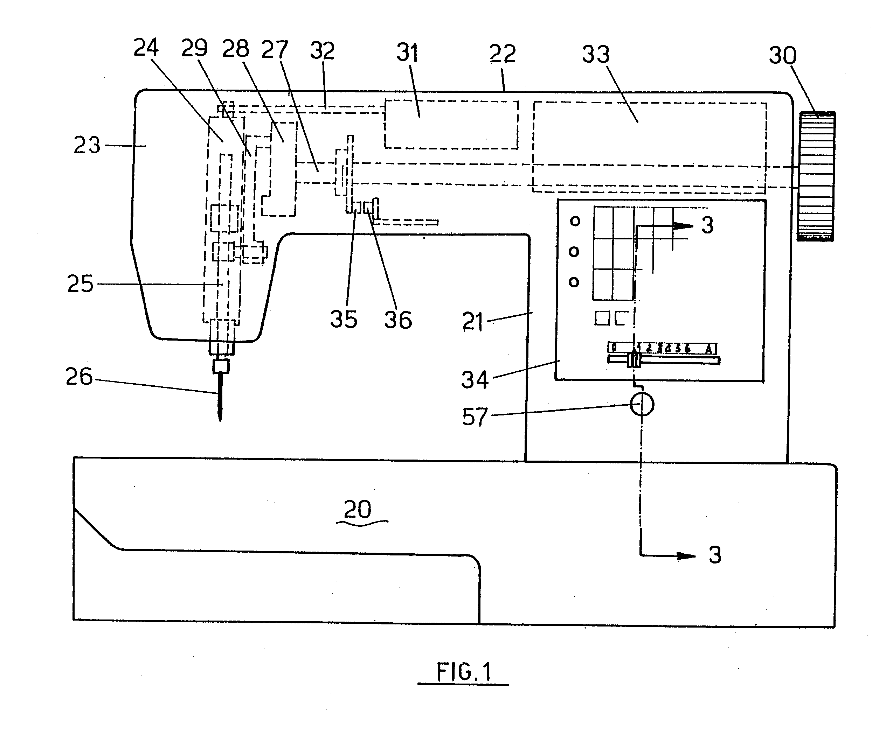

Die in Fig. 1 dargestellte Nähmaschine weist ein Gestell 20 auf, das vorzugsweise freiarmartig ist, um das Nähen von Schlauchmaterial zu ermöglichen. Am Gestell 20 ist ein Ständer 21 befestigt, der einen sich über dem Gestell 20 erstreckenden Arm 22 trägt. Am Ende des Armes 22 befindet sich ein Kopf 23, in dem die Elemente angeordnet sind, die zur Stichbildung dienen, wie das Schwungstück 24, das die Nadelstange 25 trägt, an der die Nadel 26 angeordnet ist. Der Kopf 23 enthält weitere wichtige Teile, wie Fadenspanner, Oberfadenspannung, Nähfusstange, usw., die nicht dargestellt sind,

0134046

weil sie nicht zum Erfindungsgegenstand gehören. Aus demselben Grund sind weder der Fadengreifer noch der Transporteur dargestellt, die im Gestell 20 enthalten sind. Es versteht sich auch, dass ein nicht dargestellter elektrischer Motor zum Antrieb der Hauptwelle 27 vorhanden ist. Die Auf- und Abwärtsbewegung der Nadelstange wird über einen gewöhnlichen Kurbeltrieb angetrieben, der aus einer ausgewuchteten Kurbel 28 und aus der Pleuelstange 29 besteht. Am entgegengesetzten Ende der Hauptwelle 27 befindet sich ein Handrad 30 zur Steuerung der Nadel von Hand. In Fig. 1 ist auch die bevorzugte Lage der elektronischen Hauptbestandteile angedeutet, wobei im Linearmotor der Stellungsfühler eingebaut sein kann, der über die Pleuelstange 32 mit dem Schwungstück 24 verbunden ist. Die elektronische Schaltplatte 33 umfasst u.a. einen Trafo und einen Gleichrichter zur Speisung des Linearmotors 31, Festwertspeicher (ROM), eine Logikschaltung, zu der die Eingabesignale (Input) von der Schalttafel 34, der Synchronisiervorrichtung und dem Stellungsfühler (Feedback) geführt werden. Die Ausgabesignale (Output) gelangen zum Linearmotor und zur Schalttafel zur zweckmässigen Signalisierung. Die Synchronisiervorrichtung lässt die Bewegung des Linearmotors 31 nur bei sich ausserhalb des Stoffes befindender Nadel zu und besteht aus einem an der Hauptwelle 27 befestigten Drehteil 35 und aus einem feststehenden Teil 36. Das gegen die Winkelstellung empfindliche Element kann ein "Magnistor" o.dgl. sein.

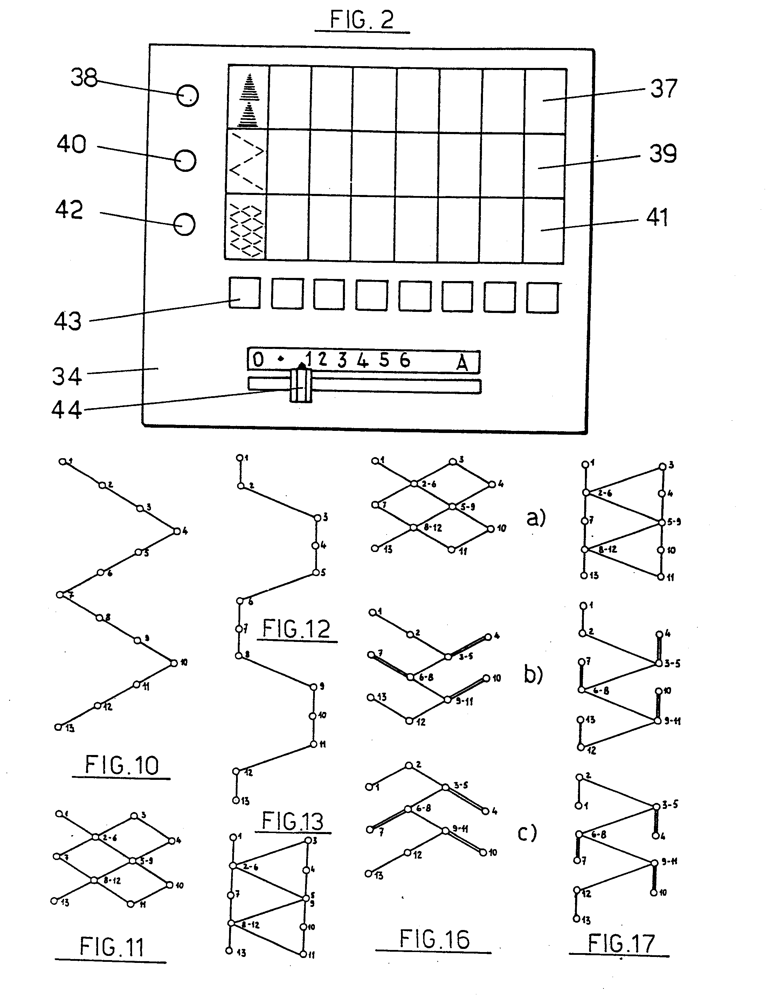

Die Schalttafel 34 ist in Fig. 2 im einzelnen dargestellt. Sie enthält drei Zierstichscharen, die je zum Beispiel aus acht Zierstichmustern bestehen. Die erste Schar 37 besteht aus Engzierstichmustern, die auch "Satin"-Stiche genannt werden und durch eine gleichbleibende und sehr kurze Stichlän-

0134046

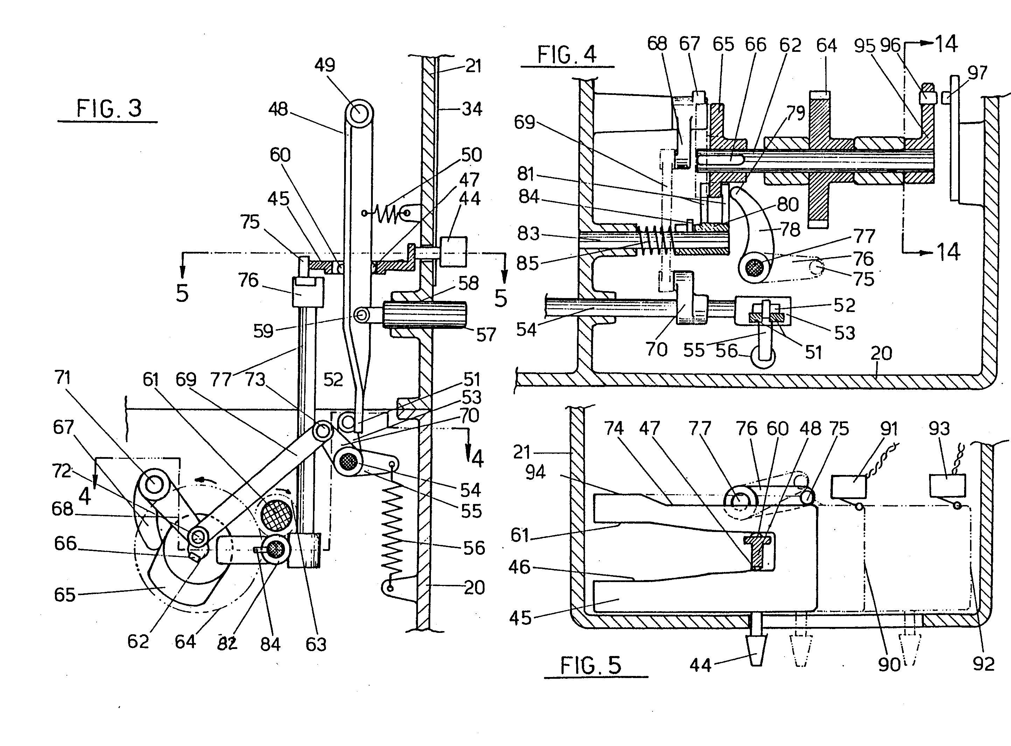

ge gekennzeichnet sind. Eine Warnlampe 38 macht die Näherin darauf aufmerksam, dass die Maschine zur Ausführung dieser Zierstiche bereit ist. Eine zweite Schar 39 besteht aus Kurztakt-Zierstichmustern mit gleichbleibender Stichlänge (mittellang oder lang) und an der Seite ist die entsprechende Warnlampe 40 angeordnet. Eine dritte Schar 41 besteht aus Kurztakt-Zierstichmustern mit automatischem Transport und an der Seite befindet sich die entsprechende Warnlampe 42. An einer Reihe Tasten 43 wählt die Näherin das Zierstichmuster. In den Tasten 43 ist vorzugsweise eine Warnlampe eingebaut. Um die gewünschte Schar zu wählen, betätigt die Näherin den Sticheinstellknopf 44. Insbesondere in den Figuren 3, 4, 5 sieht man, dass der Sticheinstellknopf 44 an der Gleitplatte 45 befestigt ist, die auf nicht dargestellten Führungen auf einer waagerechten Ebene frei gleitet und mehrere Aufgaben erfüllt. Am Profil 46 stützt sich der Kugelkopf 47 des Hebels 48 ab, der an dem am Gestell befestigten Zapfen 49 angelenkt ist und von der Feder 50 gegen die Fläche 46 der Gleitplatte 45 gedrückt wird. Am entgegengesetzten Ende der Anlenkung weist der Hebel 48 zwei Zinken 51 auf, die mit dem an der Kurbel 53 befestigten Zapfen 52 in Wirkverbindung stehen. Die Kurbel 53 ist an der Welle 54 starr befestigt und weist einen zweiten Arm 55 auf, auf den die Feder 56 wirkt, um das aus dem Hebel 48 und der Kurbel 53 bestehende Elementarpaar wirksam zu machen. Die Welle 54 ist diejenige, die bei Nähmaschinen in der Regel Sticheinstellwelle genannt wird. Bekanntlich hängt bei fast allen modernen Nähmaschinen die Stichlänge von der Winkelstellung der Sticheinstellwelle ab. So hat man in einer bestimmten Winkelstellung der Sticheinstellwelle den Nulltransport, d.h. der Stoff bewegt sich nicht. Dreht man die Sticheinstellwelle in eine gewisse Richtung, so werden die Stichlängen bis zu einem Höchstwert

0134046

allmählich grösser. Dreht man die Sticheinstellwelle in die entgegengesetzte Richtung, so hat man dieselben Stichlängen in umgekehrter Folge. Die beschriebene kinematische Kette stellt eine normale Steuerung von Hand zur Einstellung der Stichlänge dar. Verschiebt man den Knopf 44 nach rechts, so dreht die Sticheinstellwelle 54 aufgrund dieser kinematischen Kette allmählich zunehmend in Uhrzeigersinn um. Ein in der Bohrung 58 des Ständers 21 mit Spiel eingebauter Druckknopf 57 ist über die Anlenkung 59 mit dem Hebel 48 verbunden. Drückt man den Knopf 57 gegen die Kraft der Federn 50 und 56, so lehnt sich der Hebel 48 über den Kugelkopf 60 gegen das Profil 61 der Pleuel 45 an. Das Profil 61 und das Profil 46 sind im wesentlichen symmetrisch, so dass die von der in Gegenuhrzeigersinn drehenden Kurbel 53 eingenommenen und die vom Profil 46 gegebenen Stellungen symmetrisch sind. In diesem Zustand führt die Nähmaschine den Rückwärtstransport aus.

Die Sticheinstellwelle 54 wird auch durch eine automatische Vorrichtung gesteuert. Die Unterwelle 61 (Fig. 3) der Nähmaschine ist in der Regel über einen Zahnriemen mit der Hauptwelle 27 verbunden und wird von derselben mit dem Übersetzungsverhältnis 1:1 in Umlauf gebracht. Die Welle 61 treibt die Vorgelegewelle 62 über eine Räderpaarung 63, 64 mit dem Übersetzungsverhältnis 3:1 an, so dass jeder Umdrehung der Vorgelegewelle 62 drei Umdrehungen der Unterwelle 61 entsprechen. An der Vorgelegewelle 62 ist eine Nockenscheibe 65 angeordnet. Ein Keil 66 macht sie mit der Welle 62 drehfest, ohne ihre Axialverschiebung zum Ein- und Ausschalten zu verhindern. Auf die Nockenscheibe 65, nachdem sie eingeschaltet ist, wirkt der Abtaststift 67, der über ein ebenes Gelenkviereck, das aus der am Abtaststift 67 befestigten bewegenden Kurbel 68, aus der Pleuelzugstange 69 und aus der beweg-

0134046

ten Kurbel 70 besteht, eine programmierte Pendelbewegung auf die Sticheinstellwelle 54 überträgt. Der Kontakt zwischen Abtaststift 67 und Nockenscheibe 65 ist durch die Feder 56 gesichert. Der Zapfen 71 ist am Gestell 20 befestigt, während die Zapfen 72, 73 beweglich sind und die relative Bewegung zwischen den Teilen sichern. Das Ein- bzw. Ausschalten der oben beschriebenen automatischen Vorrichtung erfolgt über eine kinematische Kette, die die Bewegung von der Profilfläche 74 der Platte 45 erhält, auf der die Sprosse 75 des Hebels 76 aufliegt. Der Hebel 76 und der untere Hebel 78 sind an der stehenden Spindel 77 befestigt. Das Endglied 79 des Hebels 78 berührt die Gabel 80, die aus zwei die Nockenscheibe 65 umgreifenden, parallelen Teilen 81 und aus der am Zapfen 83 des Gestells 20 angeordneten Hülse 82 besteht. Eine Sprosse 84 verhindert die Drehung der Gabel 80 um den Zapfen 83, erlaubt jedoch ihre Verstellung. Eine Feder 85 betätigt alle beschriebenen Elementarpaare.

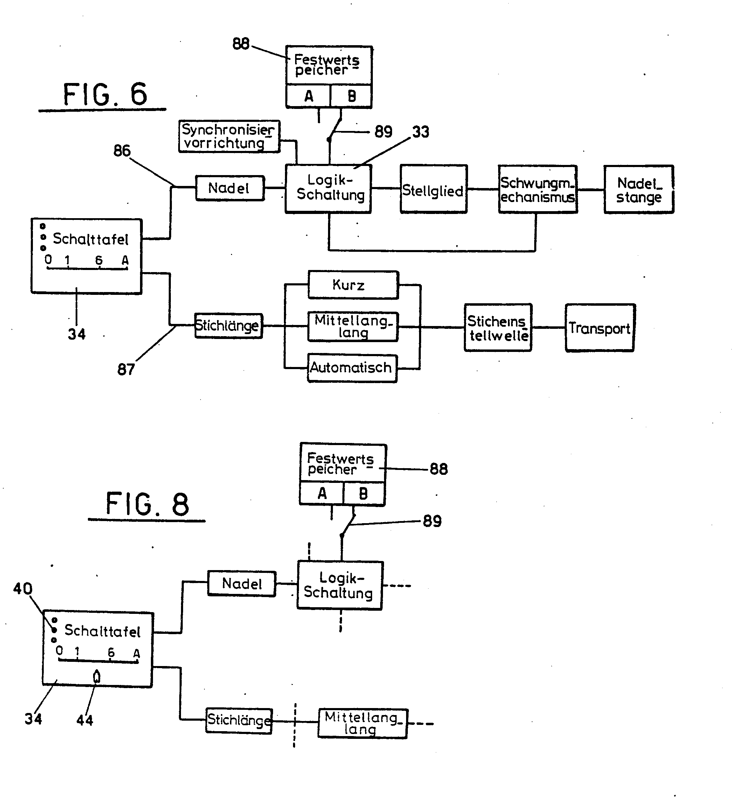

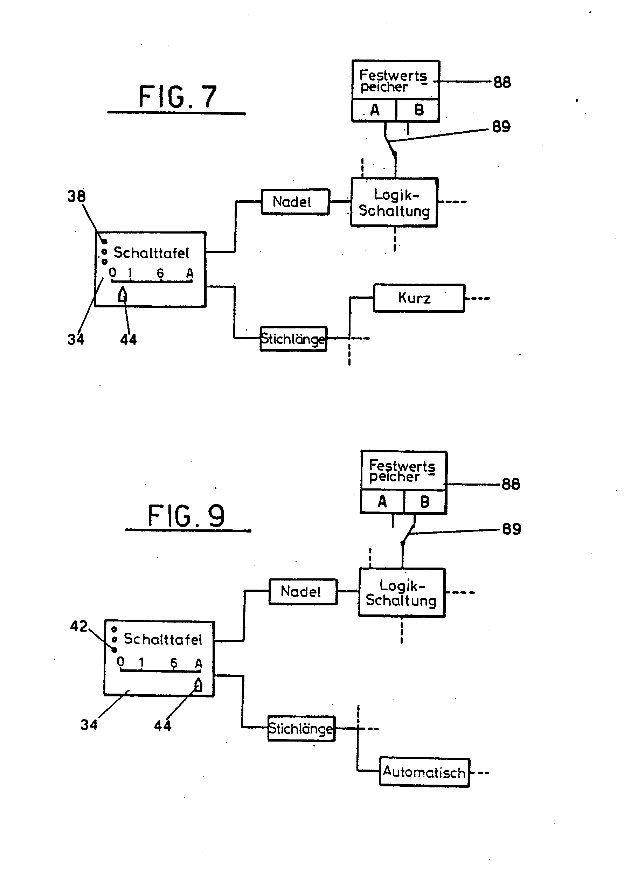

ARBEITSWEISE. Die drei möglichen Betriebsbedingungen der Nähmaschine sind in den Blockschaltbildern der Figuren 6, 7, 8 und 9 dargestellt. Fig. 6 zeigt ein allgemeines Schaltbild der Möglichkeiten der Nähmaschine. Von einer Schalttafel 34 gehen zwei Antriebsketten aus: eine Antriebskette 86 für die Querbewegungen der durch eine elektronische Logikschaltung 33 gesteuerten Nadelstange und eine Antriebskette 87 für die durch ein mechanisches System gesteuerte Stichlänge. Der Festwertspeicher 88 für die Nadelstellungen gliedert sich in zwei Teile A und B, die durch einen Wähler 89 gewählt werden können.

A) Betrieb mit kurzer Stichlänge (Fig. 2, 4, 5, 7). Der Sticheinstellknopf 44 kann die Strecke zwischen 0 und 1 bedienen.

- 9 -

0134046

Die Nähmaschine ist zur Ausführung der Zierstichmuster der ersten Schar 37 mit Eng- bzw. "Satin"-Stichen ausgelegt, die im Teil A des Festwertspeichers 88 gespeichert sind. Die Warnlampe 38 leuchtet auf. Zur Wahl eines Zierstichmusters der ersten Schar kann die Näherin den einen der beiden Wählknöpfe 43 niederdrücken, die in bekannter Weise einen Adressenweiser im Speicherteil 88A richten. Die Nockenscheibe 65 ist ausgeschaltet und läuft mit der Welle 62 leer um.

B) Betrieb mit mittellanger - langer Stichlänge (Fig. 2, 4, 5, 8). Der Sticheinstellknopf 44 bedient die Strecke mit den Werten von 1 bis 6. Die zum Beispiel in Stellung 90 (Fig. 5) verschobene Platte 45 wirkt auf den Mikroschalter 91, der den Wähler 89 des Westwertspeicherteil 88A auf den Festwertspeicherteil 88B umschaltet. Die Warnlampe 38 erlischt und die Warnlampe 40 leuchtet auf. Die Nähmaschine ist nun zur Ausführung der Zierstichmuster der zweiten Schar 39, und zwar der Kurztakt-Nutzstiche, ausgelegt. Zur Wahl eines Zierstichmusters der zweiten Schar kann die Näherin den einen der Druckknöpfe 43 niederdrücken. Die Nockenscheibe 65 ist noch ausgeschaltet.

C) Betrieb mit automatischem Transport (Fig. 2, 4, 5, 9). Der Sticheinstellknopf 44 wird am rechten Ende seines Weges, im Bereich des Buchstabens A der Schalttafel 34 gestellt. Die Platte 45 gleitet in Stellung 92. Der Mikroschalter 91 bleibt in der Anordnung des vorhergehenden Falls und das bedeutet, dass die Maschine noch für die Zierstichmuster ausgelegt ist, deren Nadelbewegungswerte im Festwertspeicherteil 88B gespeichert sind. Die Platte 45 in Stellung 92 wirkt auf einen zweiten Mikroschalter 93, der die Warnlampe 40 zum Erlöschen und die Warnlampe 42 zum Aufleuchten bringt. Die Profilflä-

0134046

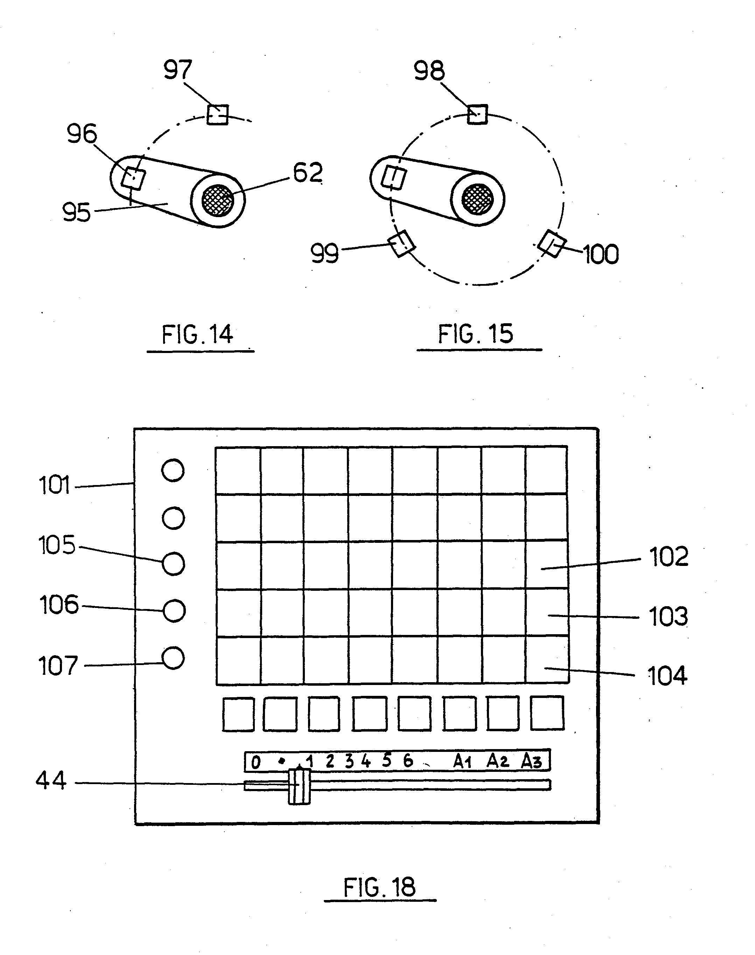

che 74 der Platte 45 bewirkt mit der Zacke 94 das Einschalten der Stofftransportautomatik. Die Nähmaschine ist zur Ausführung der Zierstichmuster der dritten Schar 41 ausgelegt, die Kurztakt-Stiche sind und für die Nadelstellungen die gleichen Werte der Schar 39 haben. Der automatische Transport verursacht jedoch eine wesentliche Änderung des Zierstichmusters sowohl hinsichtlich des Aussehens als auch des Nutzeffektes. Die Nockenscheibe 65 ist so profiliert, dass die Nähmaschine zwei Stiche mit Vor- und einen Stich mit Rückwärtstransport in sich wiederholender Reihenfolge ausführt. Die Verwandlung, die das Zierstichmuster beim automatischen Transport erfährt, läst sich leicht darstellen. Zum Beispiel verwandelt sich das Zierstichmuster laut Fig. 10 in das Zierstichmuster laut Fig. 11 und das Zierstichmuster laut Fig. 12 verwandelt sich in das Muster laut Fig. 13. In diesen Beispielen ist der Rückwärtstransport in Bezug auf den Arbeitsanfang immer am zweiten Stich eingeschaltet, und zwar in einer "V-R-V"-(Vorwärts-Rückwärts-Vorwärts-)-Reihenfolge. Bei anderen Reihenfolgen (zum Beispiel "R-V-V" oder "V-V-I") würden sich andere Zierstichmuster ergeben. Um eine zufällige Reihenfolge zu vermeiden, ist eine weitere Synchronisiervorrichtung (Fig. 4 und 14) vorgesehen, deren beweglicher Teil der Hebel 95 ist, der den Magnetzünder 96 trägt und an der Welle 62 angeordnet ist und deren feststehender Teil das empfindliche Element 97 (Magnistor) ist. Das von dieser Vorrichtung abgegebene Signal ordnet das Programm für die Nadelbewegung am ersten Stich an. Sie wirkt nur einmal, und zwar jedesmal, wo der Mikroschalter 93 bzw. die Tasten 43 betätigt werden, um das Zierstichmuster zu wechseln.

Eine Variante der betreffenden Vorrichtung sieht drei weitere Einstellungen vor, um die Anzahl der möglichen Zierstichmuster zu erhöhen (Fig. 15). Anstelle des empfindlichen Ele-

- 11 -

0134046

ments 97 sieht diese Variante bis zu drei empflindlichen Elementen 98, 99, 100 vor, die um 120$^{\circ}$ um die Welle 62 angeordnet sind. In den Figuren 16 und 17 sind die neuen dadurch ausführbaren Zierstichmuster dargestellt. Das Zierstichmuster laut Fig. 10 verwandelt sich bei Einschalten des automatischen Transportes in das Zierstichmuster 16a), wenn der Programmanfang zum Beispiel durch die Synchronisiervorrichtung 98 bestimmt wird, in das Zierstichmuster 16b), wenn die Synchronisiervorrichtung 99 in Anspruch genommen wird, und schliesslich in das Zierstichmuster 16c), wenn die Synchronisiervorrichtung 100 in Anspruch genommen wird. Ähnlich verwandelt sich das Zierstichmuster nach Fig. 12 bei Einschalten der Transportautomatik in die Zierstichmuster 17a), 17b), 17c). Bei dieser Variante ist eine reichhaltigere Schalttafel 101 vorgesehen (Fig. 18). Bei diesen dadurch fünf gewordenen Scharen von Zierstichmustern werden die Schar 41 und die Warnlampe 42 durch die Scharen 102, 103, 104 ersetzt, an deren Seiten sich die Warnlampen 105, 106, 107 befinden. Die Wahl erfolgt stets durch den Sticheinstellknopf 44, der die Nähmaschine für die Zierstichmuster der neuen Scharen auslegt, wenn er in die Stellungen A1, A2, A3 gebracht wird.

0134046

Naehmaschine geeignet zur Ausfuehrung von Stickereien

PATENTANSPRÜCHE

1. Haushaltnähmaschine, bei der ein durch einen Mikroprozessor gesteuerter elektronischer Kreis Festwertspeicher umfasst, um die mehreren Zierstichen entsprechenden Werte der Nadelstangen-Querstellungen wiederholbar zu speichern, dadurch gekennzeichnet, dass einige dieser Zierstiche durch Einschalten einer mechanischen Nockenvorrichtung ausgeführt werden, die auf den Stoffbahntransport zyklisch wirkt.

2. Nähmaschine nach Anspruch 1, dadurch gekennzeichnet, dass die auf den Stoffbahntransport wirkende Vorrichtung aus nur einem Nocken besteht.

- 2 -

0134046

3. Nähmaschine nach Anspruch 1, dadurch gekennzeichnet, dass das Aussenbetätigungselement, das die Stichlänge einstellt, gleichzeitig als Wähler für wenigstens zwei Zierstichscharen dient.

4. Haushaltnähmaschine mit einem Aussenbetätigungselement, das die Stichlänge stufenweise zwischen dem Null- und dem Höchstwert einstellt und das auf seinem Weg eine automatische Transportregelvorrichtung einschaltet, dadurch gekennzeichnet, dass auf der ersten, den kurzen Werten der Stichlänge entsprechenden Wegstrecke das Betätigungselement die Maschine zur Ausführung einer ersten Schar automatischer Zierstiche auslegt, im zweiten, den mittellangen und langen Werten der Stichlänge entsprechenden Strecke die Maschine zur Ausführung einer zweiten Schar von automatischen Zierstichen und in der letzten, dem Einschalten der automatischen Transportregelvorrichtung entsprechenden Strecke die Maschine zur Ausführung von wenigstens einer weiteren Schar automatischer Zierstiche auslegt, wobei Mittel zur Wahl des Zierstiches innerhalb der ausgewählten Schar vorgesehen sind.

5. Nähmaschine nach Anspruch 4, bei der sich der Weg des Aussenbetätigungselementes zur Stichlängeneinstellung in drei Strecken gliedern kann, dadurch gekennzeichnet, dass beim Übergang von der zweiten auf die dritte Strecke keine Umschaltung der für die Nadelstellungen gespeicherten Werte stattfindet.

6. Nähmaschine nach Anspruch 2, dadurch gekennzeichnet, dass sich über ein Aussenbetätigungselement neue Zierstiche dadurch ausführen lassen,dass das Verhältnis zwischen den zyklisch aufeinaderfolgenden Werten des Stoffbahntransportes und den ebenfalls zyklisch aufeinanderfolgenden Werten der Nadelstellung verändert wird.

FIG.1

## FIG. 2

## FIG.10

## FIG.11

## FIG.12

## FIG.13

a)

b)

c)

## FIG.16

## FIG.17

0134046

FIG. 3

FIG. 4

FIG. 5

0134046

## FIG. 6

88 — Festwerts peicher =
| A | B |

86

Synchronisier vorrichtung

Nadel — Logik-Schaltung — Stellglied — Schwungm echanismus — Nadel stange

89   33

Schalttafel
0  1   6  A

34

87 — Stichlänge — Kurz / Mittellang lang / Automatisch — Sticheins tellwelle — Transport

## FIG. 8

Festwerts peicher = — 88
| A | B |

89

40

Nadel — Logik-Schaltung

Schalttafel
0  1   6  A

34   44

Stichlänge ┆ Mittellang lang

0134046

## FIG. 7

| Festwerts peicher | | 88 |
| A | B |
| | | 89 |

Nadel — Logik-Schaltung

Schalttafel
0  1  6  A

38
34  44

Kurz

Stichlänge

## FIG. 9

| Festwerts peicher | | 88 |
| A | B |
| | | 89 |

Nadel — Logik-Schaltung

Schalttafel
0  1  6  A

42
34  44

Stichlänge

Automatisch

FIG.14

FIG.15

FIG.18